# EUROPÄISCHE PATENTSCHRIFT

(11) **EP 0 334 107 B1**
(45) Veröffentlichungstag und Bekanntmachung des Hinweises auf die Patenterteilung: **11.08.1993**
(21) Anmeldenummer: 89104092.5
(22) Anmeldetag: 08.03.1989
(51) Int. Cl.: C04B 41/88, C03C 17/10

(54) **Verwendung von Glanzedelmetallpräparaten für hochresistente, spülmaschinenbeständige Dekore auf Geschirrteilen**
Use of glossy noble-metal preparations in kitchen utensil decorations highly resistant to dish-washing machines
Utilisation de préparations de métaux nobles brillants pour décorations de vaisselle résistant aux machines à laver

(30) Priorität: 22.03.1988 DE 3809541
(43) Veröffentlichungstag der Anmeldung: 27.09.1989
(73) Patentinhaber: DEGUSSA AKTIENGESELLSCHAFT, 60311 Frankfurt (DE)
(72) Erfinder: Lotze, Marion, Dr., D-6451 Hammersbach (DE); Mehner, Hans, D-6230 Frankfurt 80 (DE); Kleinschmit, Peter, Dr., D-6450 Hanau 9 (DE)

(56) Entgegenhaltungen:
- DE-A- 3 245 392
- DE-B- 1 421 865
- DE-B- 2 208 915
- US-A- 2 490 399

## Beschreibung

Die Erfindung betrifft die Verwendung von Glnzedelmetallpräparaten für mechanisch hochresistente, spülmaschinenbeständige Glanzedelmetalldekore auf Geschirrteilen aus silikatischen Werkstoffen, wie Porzellan, Steingut oder Keramik.

Aus der DE-AS 14 21 865 sind Glanzedelmetallpräparate bekannt, die aus einer löslichen organischen Edelmetallverbindung, einem löslichen Flußmittel in Form von organischen Unedelmetallverbindungen und einem organischen Träger bestehen. Als Flußmittel werden metallorganische Verbindungen in Mengen von 0,25 bis 10 Mol Unedelmetall pro Mol Edelmetall eingesetzt. Diese Präparate dienen zur Herstellung edelmetallhaltiger Filme auf Gegenständen aus Glaskeramik und werden bei Temperaturen bis 1140°C eingebrannt. Diese Überzüge zeigen jedoch keine Glanzgoldeigenschaften und sind auch nicht spülmaschinenbeständig.

Weiterhin ist es bekannt (DE-ASen 2208915 und 2435859), Poliergoldpräparate, die feste Unedelmetalloxide enthalten, oberhalb des Goldschmelzpunktes (1063°C) auf silikatische Werkstoffe aufzubringen. Die so entstehenden Goldfilme besitzen aber eine relativ hohe Schichtdicke und zeigen ebenfalls keine Glanzgoldeigenschaften. Auch sind sie nicht spülmaschinenbeständig. Es war daher Aufgabe der vorliegenden Erfindung, ein Glanzedelmetallpräparat für mechanisch hochersistente, spülmaschinenbeständige Glanzedelmetalldekore auf Geschirrteilen aus silikatischen Werkstoffen zu finden.

Diese Aufgabe wird gelöst durch die Verwendung von Glanzedelmetallpräparaten, bestehend aus einer Organogoldverbindung, gegebenenfalls in Mischung mit Organosilber-, Organopalladium- und/oder Organoplatinverbindungen, einem organischen Träger und einem Flußmittel aus organischen Metallverbindungen, das organische Siliziumverbindungen mit drei oder vier hydrolysierbaren Gruppen am Siliziumatom in Mengen von 0,1 bis 4 Mol Silizium pro Mol Edelmetall enthält.

Das Präparat kann die organische Siliziumverbindung auch in Mengen von 0,1 bis 0,3 Mol Silizium pro Mol Edelmetall und zusätzlich Zirkonsäureester oder Stannate in Mengen von 0,05 bis 0,3 Mol Zirkonium oder Zinn pro Mol Edelmetall enthalten.

Vorzugsweise verwendet man Glanzedelmetallpräparate, die als organische Siliziumverbindung eine Verbindung der allgemeinen Formel Y₄Si und/oder Y₃Six enthalten, wobei
- Y =: Alkoxy, Aryloxy, Aralkoxy, Carboxylato, Ketoximyl, Mercaptan, Halogen und/oder Pseudohalogen
- X =: Alkyl, Aryl, Aralkyl, Alkenyl, Cycloalkenyl, Vinyl und/oder heteroatomsubstituierte Analoga
bedeutet.

Als vorteilhaft haben sich siliziumorganische Verbindungen der allgemeinen Formel (ZO)₃-SiX erwiesen, bei der Z=R, R¹-OR oder R²CO ist und
- R =: lineare oder verzweigte Kohlenwasserstoffe mit 1 bis 24 C-atomen, cycloaliphatische Kohlenwasserstoffe mit 1 bis 8 C-atomen, aromatische Kohlenwasserstoffe mit 6 bis 10 C-atomen oder aliphatisch-aromatische Kohlenwasserstoffe mit 7 bis 15 C-atomen,
- R¹ =: lineare oder verzweigte Kohlenwasserstoffe mit 2 bis 10 C-atomen und
- R² =: lineare oder verzweigte Kohlenwasserstoffe mit 1 bis 10 C-atomen
bedeutet.

Günstig sind ebenso organische Siliziumverbindungen der allgemeinen Formel (ZO)₃SiX, bei der X = R²-v mit
- V =: Halogen, Mercaptan, Amin, Urethan, Amid, Harnstoff, Azid, Thiocyanat, Isocyanat, Epoxid, Glycid oder Ester und
- R² =: lineare oder verzweigte Kohlenwasserstoffe mit 1 bis 10 C-atomen
bedeutet.

Vorzugsweise bedeutet
- R² =: (CH₂)ₙ (n = 1,2,3) und
- V =: Chlor, Brom, Jod, Isocyanat, Akryloxy, Dimethylamin, Glycid, Mercaptan.

Als Zirkonester werden handelsübliche Verbindungen, wie Zirkontetraisopropylat oder Zirkontetra-2,4-pentadionat, und als Stannat zum Beispiel Zinnresinat eingesetzt.

Diese Glanzedelmetallpräparate werden oberhalb des Goldschmelzpunktes, vorteilhafterweise bei etwa 1250°C, auf silikatische Werkstoffe, wie Porzellan oder Steingut, eingebrannt und ergeben dünne, glänzende Überzüge mit hoher mechanischer und chemischer Resistenz. Insbesondere sind diese Überzüge spülmaschinenbeständig und weisen gemäß der DIN-Prüfvorschrift 50275 auch nach 3000 Spülungen und anschließender mechanischer Beanspruchung (Abrieb) keine Zerstörungen auf.

Zur Herstellung der Dekore können handelsübliche Glanzedelmetallpräparate verwendet und die üblichen Auftragstechniken benutzt werden. Die Bestandteile der Präparate können beispielsweise aus der DE-AS 14 21 865 entnommen werden.

Folgende Beispiele beschreiben einige Edelmetallpäparate, die spülmaschinenbeständige Dekore auf Geschirrteilen ergeben.
1. Ein Glanzedelmetallpräparat der Zusammensetzung:

| | |
|---|---|
| Goldsulforesinat (56% Au) | 17,9 Gew.% |
| Silbersulforesinat (20% Ag) | 5,0 " |
| Rhodiumsulforesinat ( 5% in Terpineol) | 1,0 " |
| Wismutresinat ( 7% in Terpineol) | 1,0 " |
| Chromresinat ( 3% in Terpineol) | 1,5 " |
| Tetraethoxysilan | 10,4 " |
| Asphalt (50% in Terpineol) | 25,0 " |
| Kolophoniummodifiziertes Phenolharz | 15,0 " |
| Pine Oil | 23,2 " |

wird homgenisiert und 8 Stunden bei 50°C getempert. Nach dem Abziehbildverfahren wird auf Hartporzellan eine Fläche von 4,5 x 6 cm bedruckt. Nach dem Brennen bei 1250°C und 90 min Durchgangszeit erhält man eine glänzende Goldlegierungsschicht, die spülmaschinenbeständig ist und auch nach 3000 Spülungen ihren Goldglanz nicht verliert.
2. Ein Goldglanzedelmetallpräparat der Zusammensetzung:

| | |
|---|---|
| Goldsulforesinat (56% Au) | 17,9 Gew.% |
| Silbersulforesinat (20% Ag) | 5,0 " |
| Palladiumsulforesinat ( 8% in Terpineol) | 6,3 " |
| Rhodiumsulforesinat ( 5% in Terpineol) | 1,0 " |
| Wismutresinat ( 7% in Terpineol) | 1,0 " |
| Chromresinat ( 3% in Terpineol) | 1,5 " |
| Triethoxysilylpropylcarbamat | 11,4 " |
| Kolophoniummodifiziertes Phenolharz | 20,0 " |
| Terpineol | 35,9 " |

wird mit einem Pinsel auf Hartporzellan aufgetragen und bei 1240°C gebrannt. Auch hier erhält man ein Dekor, das spülmaschinenbeständig ist.
3. Ein Glanzedelmetallpräparat der Zusammensetzung:

| | |
|---|---|
| Goldsulforesinat (56% Au) | 17,9 Gew.% |
| Silbersulforesinat (20% Ag) | 5,0 " |
| Rhodiumsulforesinat ( 5% in Terpineol) | 1,0 " |
| Wismutresinat ( 7% in Terpineol) | 1,0 " |
| Chromresinat ( 3% in Terpineol) | 1,5 " |
| Tetraethoxysilan | 2,1 " |
| Zirkontetraisopropylat | 1,7 " |
| Kolophoniummodifiziertes Phenolharz | 20,0 " |
| Pine Oil | 49,8 " |

wird wie in Beispiel 1 aufgetragen und gebrannt. Das Dekor ist spülmaschinenbeständig.
4. Ein Glanzedelmetallpräparat der Zusammensetzung:

| | |
|---|---|
| Golsulforesinat (56% Au) | 17,9 Gew.% |
| Silbersulforesinat (20% Ag) | 5,0 " |
| Rhodiumsulforesinat ( 5% in Terpineol) | 1,0 " |
| Wismutresinat ( 7% in Terpineol) | 1,0 " |
| Chromresinat ( 3% in Terpineol) | 1,5 " |
| Tetraethoxysilan | 2,1 " |
| Zinnresinat (10% in Terpineol) | 6,0 " |
| Kolophoniummodifiziertes Phenolharz | 20,0 " |
| Pine Oil | 45,5 " |

wird wie in Beispiel 2 aufgetragen und gebrannt. Das Dekor ist spülmaschinenbeständig.

Weitere Beispiele für besonders geeignete organische Siliziumverbindungen sind:
3-Methacryloxypropyltrimethoxysilan,
3-Aminopropyltrimethoxysilan,
Chlormethyltrimethoxysilan,
β- (3,4-Epoxycyclohexyl)ethyltrimethoxysilan,
1,6-Bis (Trimethoxysilyl)ethan,
Bis [3-(Triethoxysilyl)propyl]amin,
Bis [3-(Triethoxysilyl)propyl] tetrasulfid.

Geeignet sind auch Kondensate des Types: 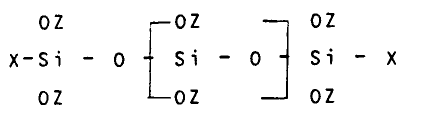
mit n = 0-10 und
X und Z
wie oben definiert.

## Patentansprüche

1. Verwendung von Glanzedelmetallpräparaten, bestehend aus einer Organgoldverbindung, gegebenenfalls in Mischung mit Organosilber-, Organopalladium- und/oder Organoplatinverbindungen, einem organischen Träger und einem Flußmittel aus organischen Metallverbindungen, das organische Siliziumverbindungen mit drei und/oder vier hydrolysierbaren Gruppen am Siliziumatom in Mengen von 0,1 bis 4 Mol Silizium pro Mol Edelmetall enthält, für mechanisch hochresistente, spülmaschinenbeständige Glanzedelmetalldekore auf Geschirrteilen aus silikatischen Werkstoffen.

2. Verwendung von Glanzedelmetallpräparaten nach Anspruch 1, wobei die organische Siliziumverbindung in Mengen von 0,1 bis 0,3 Mol Silizium pro Mol Edelmetall und zusätzlich Zirkonsäureester oder Stannate in Mengen von 0,05 bis 0,3 Mol Zirkonium bzw. Zinn pro Mol Edelmetall vorhanden ist.

3. Verwendung von Glanzedelmetallpräparaten nach Anspruch 1 und 2, wobei als organische Siliziumverbindung eine Verbindung der allgemeinen Formel Y₄Si verwendet wird, bei der
Y = Alkoxy, Aryloxy, Aralkoxy, Carboxylato, Ketoximyl, Mercaptan, Halogen und/oder Pseudohalogen
bedeutet.

4. Verwendung von Glanzedelmetallpräparaten nach Anspruch 1 und 2, wobei als organische Siliziumverbindung eine Verbindung der allgemeinen Formel Y₃SiX verwendet wird, die der
Y = Alkoxy, Aryloxy, Aralkoxy, Ketoximyl, Mercaptan, Halogen und/oder Pseudohalogen ;
X = Alkyl, Aryl, Aralkyl, Cycloalkenyl, Vinyl und/oder heteroatomsubstituierte Analoga
bedeutet.

5. Verwendung von Glanzedelmetallpräparaten nach Anspruch 1,2 und 4 mit organischen Siliziumverbindungen der allgemeinen Formel (ZO)₃Six, bei der Z=R, R¹- OR oder R²CO ist und
R = Lineare oder verzweigte Kohlenwasserstoffe mit 1 bis 24 C-atomen, cycloaliphatische Kohlenwasserstoffe mit 1 bis 8 C-atomen oder aliphatisch-aromatische Kohlenwasserstoffe mit 7 bis 15 C-atomen ;
R¹ = lineare oder verzweigte Kohlenwasserstoffe mit 2 bis 10 C-atomen und
R² = lineare oder verzweigte Kohlenwasserstoffe mit 1 bis 10 C-atomen
bedeutet.

6. Verwendung von Glanzedelmetallpräparaten nach Anspruch 1,2,4 und 5 mit organischen Siliziumverbindungen der allgemeinen Formel (ZO)₃Six, bei der
X = R²-V bedeutet, mit V = Halogen, Mercaptan, Amin, Urethan, Amid, Harnstoff, Azid, Thiocyanat, Isocyanat, Epoxid, Glycid oder Ester und
R² = lineare oder verzweigte Kohlenwasserstoffe mit 1 bis 10 C-atomen.
Verwendung von Glanzedelmetallpräparaten für hochresistente, spülmaschinenbeständige Dekore auf Geschirrteilen

## Claims

1. Use of lustrous noble metal preparations comprising an organic gold compound, optionally mixed with organic silver, organic palladium and/or organic platinum compounds, an organic carrier and a fluxing material comprising organic metal compounds containing organic silicon compounds with three of four hydrolysable groups on the silicon atom in quantities of 0.1 to 4 moles of silicon per mole of noble metal, for mechanically highly resistant and in particular dishwasher-resistant lustrous noble metal decorations on crockery made of silicate materials.

2. Use of lustrous noble metal preparations as claimed in Claim 1, wherein the organic silicon compound is present in quantities of 0.1 to 0.3 mole of silicon per mole of noble metal together with zirconic acid esters or stannates in quantities of 0.05 to 0.3 mole of zirconium or tin per mole of noble metal.

3. Use of lustrous noble metal preparations as claimed in Claims 1 and 2, where a compound of general formula Y4Si, in which Y = alkoxy, aryloxy, aralkoxy, carboxyl, ketoximyl, mercaptan, halogen and/or pseudohalogen, is used as organic silicon compound.

4. Use of lustrous noble metal preparations as claimed in Claims 1 and 2, where a compound of general formula Y₃SiX, in which
Y = alkoxy, aryloxy, aralkoxy, ketoximyl, mercaptan, halogen and/or pseudohalogen;
X = alkyl, aryl, aralkyl, cycloalkenyl, vinyl and/or heteroatom-substituted analogues,
is used as organic silicon compound.

5. Use of lustrous noble metal preparations as claimed in Claims 1, 2 and 4 with organic silicon compounds of general formula (ZO)₃SiX, in which Z = R, R¹-OR or R²CO,
R = straight- or branch-chained hydrocarbons with 1 to 24 C-atoms, cycloaliphatic hydrocarbons with 1 to 8 C-atoms or aliphatic-aromatic hydrocarbons with 7 to 15 C-atoms;
R¹ = straight- or branch-chained hydrocarbons with 2 to 10 C-atoms and
R² = straight- or branch-chained hydrocarbons with 1 to 10 C-atoms.

6. Use of lustrous noble metal preparations as claimed in Claims 1, 2, 4 and 5 with organic silicon compounds of general formula (ZO)₃SiX, in which
X = R²-V, with V = halogen, mercaptan, amine, urethane, amide, urea, azide, thiocyanate, isocyanate, epoxide, glycide or ester and
R² = staight- or branch-chained hydrocarbons with 1 to 10 C-atoms.

## Revendications

1. Utilisation de compositions de métaux nobles brillantes, constituées d'un composé organique à base d'or, éventuellement en mélange avec des composés organiques à base d'argent, de palladium et/ou de platine, d'un support organique et d'un fondant à base de composés métalliques organiques, qui contient des composés Organiques à base de silicium comportant 3 ou 4 groupes hydrolysables sur l'atome de silicium, en quantités de 0,1 à 4 moles de silicium par mode de métal noble, pour décors de métaux nobles brillants, à haute résistante mécanique et résistants au lavage en machine, sur des pièces de vaisselle en matériaux siliceux.

2. Utilisation de compositions de métaux nobles brillantes selon la revendication 1, dans laquelle le composé organique à base de silicium est présent en quantités de 0,1 à 0,3 mole de silicium par mode de métal noble, et sont en outre présents des esters d'acide zirconique ou des stannates en quantités de 0,05 à 0,3 mode de zirconium ou d'étain par mole de métal noble.

3. Utilisation de compositions de métaux nobles brillantes selon la revendication 1 ou 2, dans laquelle, en tant que composé organique à base de silicium, on utilise un composé de formule générale Y₄Si dans laquelle :
Y représente un groupe alcoxy, aryloxy, aralcoxy, carboxylato, cétoximyle, mercaptan, halogène et/ou pseudohalogène.

4. Utilisation de compositions de métaux nobles brillantes selon la revendication 1 ou 2, dans laquelle, en tant que composé organique à base de silicium, on utilise un composé de formule générale Y₃SiX,
dans laquelle,
Y représente un groupe alcoxy, aryloxy, aralcoxy, cétoximyle, mercaptan, halogène et/ou pseudohalogène,
X représente un groupe alkyle, aryle, aralkyle, cycloalcényle, vinyle et/ou des analogues substitués par des hétéroatomes.

5. Utilisation de compositions de métaux nobles brillantes selon l'une quelconque des revendications 1, 2 et 4, comportant des composés organiques à base de silicium de formule générale (Z0)₃SiX, dans laquelle Z=R, R¹-OR ou R²CO et
R représente des hydrocarbures linéaires ou ramifiés ayant de 1 à 24 atomes de carbone, des hydrocarbures cycloaliphatiques ayant de 1 à 8 atomes de carbone ou des hydrocarbures aliphatiques-aromatiques ayant de 7 à 15 atomes de carbone ;
R¹ représente des hydrocarbures linéaires ou ramifiés ayant de 2 à 10 atomes de carbone, et
R² représente des hydrocarbures linéaires ou ramifiés ayant de 1 à 10 atomes carbone.

6. Utilisation de compositions de métaux nobles brillantes selon l'une quelconque des revendications 1, 2, 4 et 5, comportant des composés organiques à base de silicium de formule générale (Z0)₃SiX dans laquelle
X représente R²-V, V étant un atome d'halogène ou un groupe mercaptan, amino, uréthane, amido, urée, azido, thiocyanate, isocyanate, époxy, glycide ou ester, et
R² représente des hydrocarbures linéaires ou ramifiés ayant de 1 à 10 atomes de carbone.
